# EUROPEAN PATENT SPECIFICATION

(11) **EP 0 415 207 B1**
(45) Date of publication and mention of the grant of the patent: **02.11.1995**
(21) Application number: 90115804.8
(22) Date of filing: 17.08.1990
(51) Int. Cl.: B29C 70/00, B29C 53/56, B29C 43/10, B29L 23/00

(54) **Process for producing hollow article of fiber-reinforced thermoplastic resin**
Verfahren zum Herstellen von faserverstärkten thermoplastischen Hohlkörpern
Procédé pour fabriquer des objets creux thermoplastiques renforcés de fibres

(30) Priority: 29.08.1989 JP 220383/89; 14.11.1989 JP 293932/89
(43) Date of publication of application: 06.03.1991
(73) Proprietor: THE YOKOHAMA RUBBER CO., LTD., Tokyo, 105 (JP)
(72) Inventor: Satoh, Hajime, Hiratsuka-shi, Kanagawa-ken (JP)
(74) Representative: Hansen, Bernd, Dr. Dipl.-Chem.

(56) References cited:
- EP-A- 0 087 851
- EP-A- 0 291 639
- EP-A- 0 408 161
- DE-C- 3 212 141
- FR-A- 1 537 619
- FR-A- 2 562 834
- GB-A- 2 173 144
- US-A- 4 822 272

## Description

This invention relates to a process for producing a hollow article of a fiber-reinforced thermoplastic resin (for example, a circular, an elliptical or a square pipe) by using prepregs having a thermoplastic resin as the matrix.

A composite material of a thermoplastic resin reinforced with continuous fibers has high specific strength, specific rigidity and toughness, so that its use mainly in aerospace and aircraft fields is now in advance. A hollow article of a fiber-reinforced thermoplastic resin can be used in making a monocoque structure of, e.g., the body of a flying object, and a torque tube, a pressure vessel, a pipe, or a truss structure.

A conventional process for producing a hollow article of a continuous fiber-reinforced resin is a winding process which comprises winding a prepreg in a belt form composed of continuous fibers impregnated with a resin matrix around, e.g., a metallic mandrel. In producing a hollow article by this winding process using a prepreg having a thermoplastic resin as the matrix, the prepreg itself has tack and self-adhesiveness at room temperature and is plastic, so that it can be tightly wound around a mandrel without forming voids and therefore there is no serious problem of productivity.

However, a prepreg having a thermoplastic resin as the matrix (hereinafter referred to as the thermoplastic resin prepreg) not only lacks tack and plasticity but also has a high rigidity even in the form of a thin sheet because it is nothing but a rigid fiber-reinforced plate. Therefore, the thermoplastic resin prepreg cannot be temporarily fixed to a mandrel merely by winding it around the mandrel. Therefore, the thermoplastic resin prepreg need be locally heated with a local heater before it is wound around a mandrel. Namely, winding is conducted while heating a local spot, which is defined as the spot with which the winding starts, with a local heater. In other words, it has been necessary to wind the thermoplastic resin prepreg around a mandrel while plasticizing the prepreg at this spot to impart tackiness thereto and removing voids formed between plies of winding. Because the hot spot must therefore be shifted in connection with the shift of the position of winding, the local heater cannot help becoming complicated and expensive.

Because the hot spot should be heated for a considerably long resistance time of heat inside the hot spot in order to heat the thermoplastic resin of the thermoplastic resin prepreg to its plasticization temperature, the winding of the thermoplastic resin prepreg around the mandrel requires a very long time, and therefore the productivity of a hollow article is inevitably decreased.

The production of a hollow article by using the thermoplastic resin prepreg has essential drawbacks, as apparent from the above description, that tight bonding between individual plies is difficult, which tends to give rise to voids between individual plies and that the productivity is low when an existing apparatus is used. Because it is difficult to orient the reinforcing fibers of the thermoplastic resin prepreg after being plasticized without loosening even when the thermoplastic resin prepreg is wound around a mandrel under an applied tension, there is a problem that the obtained hollow article tends to be such in which the strength of the thermplastic resin prepreg cannot be suffi- ciently reflected and which has a poor appearance.

GB-A-2173144 refers to the moulding of prepregs, which are impregnated with a thermosetting resin comprising interposing a prepreg having a resin such as polyimide, comprising a reinforcinger fiber therein between a thermally expansible core of polytetrafluoroethylene and an outer mold outside said core, applying pressure to said prepreg by heating said prepreg and said core to cause expansion of said core, and cooling said core and prepreg.

EP-A-0 291 639 refers to the forming of a thermoplastic composite pipe by wrapping
This invention is directed toward solving the above-mentioned drawbacks encountered in producing a hollow article from thermoplastic resin prepregs. Therefore, an object of this invention is to provide a process for producing a hollow article of a fiber-reinforced thermoplastic resin by which a hollow article having a high freedom of shape and high quality in which the arrangement of the fibers of the prepreg and the laminate structure of the thermoplastic resin prepreg can be realized as designed can be produced in good productivity. This invention is desirable especially when a prepreg having a high-melting thermoplastic resin as the matrix is used.

This object can be achieved by the process for producing a hollow article of a fiber-reinforced thermoplastic resin according to Claim 1.

Preferred embodiments thereof are subject matter of Claims 2 to 9.
Fig. 1 (A) is a schematic view of a solid mandrel used in this invention;
Fig. 1 (B) is a schematic view of one example of the thermoplastic resin prepreg used in this invention;
Fig. 2 is a schematic view of a situation in which the thermoplastic resin prepreg is wound around a solid mandrel;
Fig. 3 is a schematic view of a winding obtained after winding;
Fig. 4 is a schematic view of a situation in which a winding and a solid mandrel are constrained in a vacuum bag;
Fig. 5 is a schematic sectional view of apparatus for a thermoforming process;
Fig. 6 is a perspective view of a product prepared by winding a thermoplastic resin prepreg sheet around a solid mandrel and covering the winding with a metallic pipe;
Fig. 7 is a perspective view of a product prepared by heating the product shown in Fig. 6 to a temperature equal to or higher than the plasticization temperature of the matrix thermoplastic resin and cooling it to a temperature lower than that;
Fig. 8 is a perspective view of a product prepared by exchanging the solid mandrel of Fig. 7 for thicker one, heating again the matrix thermoplastic resin and the new solid mandrel to a temperature equal to or higher than the plasticization temperature of the matrix thermoplastic resin and cooling the resin to a temperature lower than that;
Fig. 9 is a schematic perspective view of one example of a process for producing a hollow article by using a hollow mandrel;
Figs. 10 to 12 are schematic perspective views of hollow mandrels used in this invention;
Figs. 13 and 14 are each a schematic view of one exmaple of means for heating a hollow mandrel;
Fig. 15 is a schematic perspective view of a situation in which a hollow winding is formed by winding the thermoplastic resin prepreg along the inner surface of the cavity of an outer mold;
Fig. 16 is a schematic perspective view of a situation in which a core comprising a core body and a thermally expansible elements is inserted into the hollow part of a hollow winding;
Fig. 17 is a schematic perspective view of a situation in which the thermally expansible elements are thermally expanded when the hollow winding is heated;
Fig. 18 is a perspective view of one example of the products of this invention;
Figs. 19 (A) and 19 (B) are each a perspective view of one example of a core used in this invention;
Fig. 20 is a perspective view of one example of the products of this invention;
Fig. 21 is a schematic side view of one example of core bodies constituting a core;
Fig. 22 is a schematic side view of one example of thermally expansible elements constituting a core;
Fig. 23 is a schematic side view of one example of outer molds;
Fig. 24 is a perspective view of one example of the products of this invention;
Fig. 25 (A) is a schematic side view of one example of core bodies constituting a core;
Fig. 25 (B) is a schematic elevational view of Fig. 25 (A);
Fig. 26 (A) is a schematic side view of one example of thermally expansible elements constituting a core;
Fig. 26 (B) is a schematic elevational view of Fig. 26 (A);
Fig. 27 (A) is a side view of one example of the products of this invention;
Fig. 27 (B) is an elevational view of Fig. 27 (A);
Fig. 28 (A) is a schematic side view of one example of core bodies constituting a core;
Fig. 28 (B) is a schematic elevational view of Fig. 28 (A);
Fig. 29 (A) is a schematic side veiw of one example of thermally expansible elements constituting a core;
Fig. 29 (B) is a schematic elevational view of Fig. 29 (A);
Fig. 30 (A) is a perspective view of one example of the products of this invention;
Fig. 30 (B) is an elevational view of Fig. 30 (A);
Fig. 31 is a schematic perspective view of one example of core bodies constituting a core;
Fig. 32 (A) is a schematic side view of one example of thermally expansible elements constituting a core;
Fig. 32 (B) is a schematic elevational view of Fig. 32 (A);
Fig. 33 is a schematic side view of one example of cores;
Fig. 34 is a perspective view of one example of the products of this invention;
Fig. 35 is a schematic side view of one example of core bodies constituting a core;
Fig. 36 is a schematic side view of one example of thermally expansible elements constituting a core;
Fig. 37 is a perspective view of one example of the products of this invention;
Fig. 38 is a shematic side view of one example of core bodies constituting a core;
Fig. 39 (A) is a schematic plan view of one example of thermally expansible elements constituting a core;
Fig. 39 (B) is schematic plan view of an assembly of the thermally expansible elements;
Fig. 40 is a schematic sectional view of the elementary part of one example of cores;
Fig. 41 is a schematic sectional view of a situation in which metallic members are inserted into a molding material;
Fig. 42 is a schematic sectional view of one example of products partially provided with a metallic member;
Fig. 43 is a perspective view of one example of the products (a slim tapered pipe) of this invention;
Fig. 44 is a schematic side view of one example of outer molds;
Fig. 45 is a schematic side view of one example of cores;
Fig. 46 is a perspective view of a preform and a core;
Fig. 47 is a schematic view of a temperature profile in the step of heating a molding material;
Fig. 48 is a schematic view of a temperature profile in the case where a molding material is washed out from one end thereof to the other in the step of molding the material;
Fig. 49 is a schematic view of a cooling pattern in the step of cooling the product at the processing temperature; and
Figs. 50 (A), 50 (B) and 50 (C) are schematic views of situations in which molds are clamped in the step of cooling.

Examples of the thermoplastic resin prepreg to be used in this invention include a one prepared by impregnating a bundle of fibers generally called tow, prepared by unidirectionally doubling a plurality of continuous fibers into a belt form, with a thermoplastic resin as a matrix (unidirectionally doubled prepreg, UD prepreg), and a woven cloth, unidirectionally doubled cloth or braided fabric of yarns before impregnation and/or interface formation, represented by a commingled yarn. Although the reinforcing fibers used for the bundle of fibers constituting the thermoplastic resin prepreg are not particularly limited, preferable examples thereof include continuous fibers having a heat resistance and a high strength, such as those of carbon, glass, aramid (aromatic polyamide), silicon carbide, boron and alumina.

Although the thermoplastic resins as the matrices are not particularly limited, preferable examples thereof include high-melting or high-softening thermoplastic resins such as polyether ether ketone (PEEK) of a m.p. of 343° C, polyphenylene sulfide (PPS) of a m.p. of 282 to 288° C, polyether imide (PEI) of a softening point of 219° C, polyether sulfone (PES), polyarylene ketone, polyarylene sulfide, polyalkylimide, polyamide imide, polyimide, polyimide sulfone, polysulfone, polyaryl sulfone and polyester.

It is desirable that the volume fraction (Vf) of fibers in this thermoplastic resin prepreg is about 0.4 to 0.7, which is higher than the volume fraction (Vf = 0.1 to 0.3) of a general fiber-reinforced thermoplastic resin.

It is necessary that the thermally expansible core (inner mold) used in this invention should be made of a resin having a heat resistance lower than that of the thermoplastic resin as the matrix of the thermoplastic resin prepreg. Namely, it is necessary that this core should have such heat resistance that it does cause melt flow at the temperature at which the thermoplastic resin of the thermoplastic resin prepreg is plasticized. It is further necessary that this core should have such a thermal expansibility as to undergo thermal expansion to such an extent as to compress the thermoplastic resin prepregs arranged in layers between the core and an outer mold from the inside toward the outside, to closely bond the plies of the thermoplastic resin prepreg to each other to remove voids formed between the plies and to orient the reinforcing fibers of the thermoplastic resin prepreg.

More particularly, this core is in the form of a solid mandrel, a hollow mandrel, a composite prepared by arranging a plurality of thermally expansible elements on the surface of a core body, or an assembly exclusively composed of a plurality of thermally expansible elements. The core body may be a one made of a metal such as iron or an aluminum alloy.

Examples of desirable resins which constitute these solid mandrel, hollow mandrel and thermally expansible element include fluorocarbon resins and silicone resins. Examples of the fluorocarbon resins include resins having large thermal expansibility and high heat resistance, such as polytetrafluoroethylene (PTFE, trade name: Teflon), polyfluoroalkoxyethylene resin (PFA) and fluorinated ethylene/propylene ether copolymer resin (FEP). Examples of the silicone resins include a one mixed with a reinforcing material of large heat resistance because the resins themselves are soft. These resins may be reinforced with a reinforcing material such as an inorganic fiber in using them.

It is particularly desirable to use PTFE among these resins. Although it is believed that PTFE has a limit of use at about 260° C and a melting point of about 335° C, it does not melt above 335° C because of its very large molecular weight and can retain its shape. Further, it has a large volume expansion and can expand by about 60 % by volume when it is heated from room temperature to 400° C. Its heat decomposition temperature is about 420° C.

In this invention, an outer mold is first arranged outside the thermally expansible core; a thermoplastic resin prepreg is interposed beween the core and the outer mold; and the thermoplastic resin prepreg and core are heated to a temperature equal to or higher than the plasticization temperature of the thermoplastic resin to expand the core.

The heating in this case may be conducted in air, an inert gas or a vacuum. A necessary heating atmosphere may be selected according to the matrix resin used. The shortest possible heating is generally desirable from the viewpoints of the prevention of deterioration of the matrix resin and the economy of time. Referring to, for example, the step of heating the thermally expansible element, it is desirable that all of the thermally expansible elements of a core be simultaneously heated, or that they are heated from one end thereof to the other, or that the elements in the middle of the core are first heated while the elements on each end of the core are heated a little later. This is because, for example, in the case of the production of a pipe, when the middle of the pipe first expands and this expansion proceeds toward the ends of the pipe, the wrinkles and loosening of the fibers constituting the pipe are caused to migrate toward the ends. When the pipe is uniformly heated as a whole, the wrinkles or loosening of the fibers difficultly occur, while when the pipe is heated from both ends, the wrinkles or loosening of the fibers are apt to concentrate on the middle.

Means for supplying energy for heating can be selected according to the actual shape of the product in consideration of the above-mentioned matters. For example, it is possible to utilize atmospheric heating, heating with a heater provided in an inner or outer mold, induction heating and a suitable combination thereof.

In this invention, after the thermoplastic resin is thus melted by heating and the molds are clamped, the outer mold together with the core and the thermoplastic resin prepreg are cooled.

This cooling greatly affects the control of the crystallinity and residual stress of the thermoplastic resin as the matrix and the retentivity of the clamping pressure (at least a clamping pressure until the solidification of the resin).

Concerning the control of the crystallinity and residual stress, it is very difficult in some cases and is not so difficult in other cases, which depends on the kind of the thermoplastic resin used as the matrix. The retention of the clamping pressure is a problem common to all matrices. This problem can be solved mainly by the design of the structure of a core. Namely, the clamping pressure can be retained until the matrix resin is solidified even when the thermally expansible elements slightly shrink either by making the core difficultly coolable (although the core in itself is more difficultly coolable than the molding material because it is situated inside the molding material, the core is thermally insulated to make it more difficultly coolable) in order to differentiate the cooling rate of the molding material (thermoplastic resin prepreg) from that of the thermally expansible elements of the core, or by the effect of the dead volume or volume elasticity of the thermally expansible elements of the core. Although this problem is often spontaneously solved without any particular intention, it is sometimes a considerably difficult problem depending on the shape of the product.

Concerning the control of the crystallinity and residual stress, it is suitable to select a suitable cooling means if there is a need to control them severely. To effect a rapid cooling, it is suitable to spray the entire including the core, the molding material and the outer mold with water or immersing in water. To effect slow cooling, it is suitable to provide heat insulation suitable for the required rate of cooling.

The product can be easily released from the core because the mandrel or the thermally expansible elements will shrink after being cooled as compared with when they are shaped. When the release of the product from the mold is impossible according to the shape of the molding (product), it will suffice when the core is suitably disassembled to withdraw it from the molding. For this purpose, it is appropriate to prepare a core which can be assembled and disassembled. In order to facilitate the release of the product from the outer mold, it is desirable to take some preliminary measures for mold release. It will suffice when the inner surface of the outer mold is covered with, for example, a release film, a release foil or a mold release. However, when a copper pipe, for example, is used as the outer mold, any measure for mold release will become unnecessary. This is because it is possible in this case to chemically dissolve the outer mold itself by etching. The use of a copper pipe as the outer mold is convenient when a small number of the products are to be produced, because it is not necessary to prepare an outer mold separately in this case. Because the copper pipe has an inner surface of a very excellent surface accuracy, it is possible to increase the accuracy of the outer surface of the obtained product.

A process for producing a hollow article of a thermoplastic resin by using a core comprising a solid mandrel, a hollow mandrel, a composite prepared by arranging a plurality of thermally expansible elements on the surface of a core, or an assembly of exclusively cosisting of a plurality of thermally expansible elements will now be described with reference to embodiments.
(1) The case in which a solid mandrel is used:
In this invention, the above-mentioned thermoplastic resin prepreg is wound around this solid mandrel. The winding is conducted suitably by the usual winding or rolling process. A thermoplastic resin prepreg of a width of 3 to 6 mm is desirably used in the winding process, and a thermoplastic resin of a width of 70 to 600 mm can be desirably used. Examples of the apparatus used in this case include winding machines used in the filament winding and tape winding processes and rolling machines used in the rolling process.

The thermoplastic resin prepreg is wound around the solid mandrel to form a pipy object under an applied tension by means of such a machine or the like. In order to prevent the winding of the thermoplastic resin prepreg from being loosened to thereby reduce gaps between plies of the winding during this winding work, it is desirable to wind the prepreg as thightly as possible by temporarily bonding plies at suitable points in the step of winding by heating the thermoplastic resin prepreg with a soldering iron or the like.

After the thermoplastic resin prepreg is completely wound around the solid mandrel to form a winding, this winding is subjected to thermoforming.

In this invention, it is necessary that the external shape of this winding when subjected to thermoforming should be constrained by the outer mold. Its object is to eliminate the following fears: When the winding whose external shape can be temporarily kept unchanged because the plies of the winding are temporarily bonded as described above is subjected to thermoforming, there are fears that the external shape of the winding is sometimes deformed and that the directions of the fibers oriented in the winding are disturbed or the fibers slide during the expansion of the solid mandrel. However, what is still more important is that this constraint of the external shape of the winding makes it possible for the first time to exert the pressure resulting from the thermal expansion of the solid mandrel uniformly on the plies of the winding wound in the pipy form from the inside toward the outside of the winding to thereby tightly bond the plies and to remove voids formed between the plies and to properly orient the reinforcing fibers of the thermoplastic resin prepreg constituting the winding.

Examples of means for performing the above-mentioned constraint of the external shape include a one comprising inserting the winding together with the solid mandrel into a vacuum bag and exerting atmospheric pressure or the like on its surface, a one comprising covering the surface of the winding with a tape or the like such as a heat-resistant film or a metallic foil and thereby utilizing the tension of taping, a one comprising covering the surface of the winding with a thin-walled metallic pipe and a one comrising using a mold. These means are suitably selected according to the specification of the hollow article to be molded. Further, prior to the constraint of the external shape, it is also possible to interpose a mold release or a release sheet between the winding and the outer mold therfor in order to prevent adherence between the outer mold for constraining the external shape of the winding and the thermoplastic resin of the winding.

The molding temperature in the thermoforming step is equal to or higher than the plasticization temperature of the thermoplastic resin of the thermoplastic resin prepreg constituting the winding. More particularly, when the thermoplastic resin used is a crystalline one, it is suitable that the molding temperature is a one higher than its melting point, desirably a temperature equal to or higher than the melting point plus 10 to 20° C. When the thermoplastic resin is an amorphous one, it is suitable that the molding temperature is a one higher than the melting point, desirably a temperature equal to or higher than the softening point plus 100° C.

Although the means for heating in the thermoforming step is not particularly limited, the simplest one that can be mentioned is an electric oven. The heating time is determined according to the size of the winding so that the center of the solid mandrel may be heated to the predetermined molding temperature. It is usually suitable to keep the winding at the predetermined molding temperature for a some time, for example 30 to 60 minutes after the winding is assumed to reach the predetermined molding temperature. When the solid mandrel is sufficiently expanded by this heating, the bonding between the plies of the winding is completed.

After the winding and the solid mandrel heated in this way are cooled, the solid mandrel is withdrawn from the winding. In this way, both the product and the solid mandrel are recovered. The cooling may be conducted by air cooling or may be forcibly conducted by any other cooling means.

Examples of the process for producing a hollow article in this case will now be described with reference to the hereto attached figures of drawings.

### Example 1:

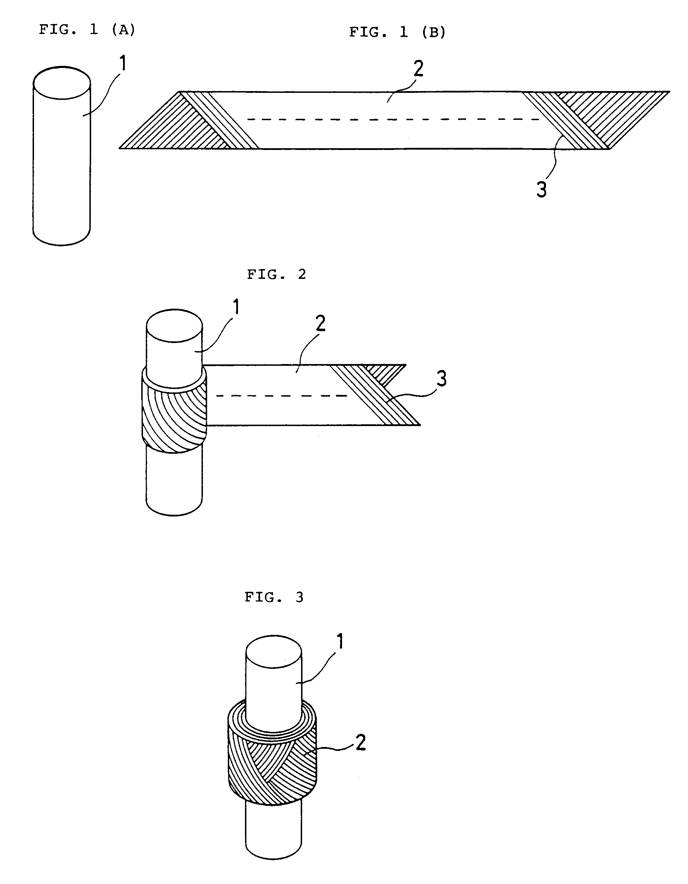

Fig. 1 (A) and Fig. 2 (A) show the first step of this invention. In Fig. 1 (A), the reference numeral 1 represents a solid mandrel made of PTFE, and in Fig. 1 (B) the numeral 2 respresents a thermoplastic resin prepreg having reinforcing fibers 3 arranged in the direction of an oblique line. The prepreg 2 was formed by superposing two sheets in each of which the reinforcing fibers 3 were cut in a bias direction. The thermoplastic resin prepreg 2 used was APC-2/AS-4, a product of ICI-Fiberite, prepared by using PEEK as the matrix and carbon fiber filaments of a diameter of about 7 µm as the reinforcing fiber and having a fiber volume fraction Vf of 0.61, a sheet width of 305 mm and a thickness of 0.125 mm.

Subsequent to the preparation in Fig. 1 (A) and Fig. 1 (B), the prepreg 2 was progressively wound around the mandrel 1 as shown in Fig. 2 with a winding machine. The prepreg 2 was wound in the pipy form under an applied tension so that it might be prevented from loosening, and temporarily bonded by heating at several points with a soldering iron in the step of winding.

Fig. 3 shows the winding 11 formed by completing the above winding. In this state, the diameter of the mandrel was 30 mm, the ply number of the thermoplastic resin prepreg 2 was 30, and the wall thickness of the ply layer was about 4.8 mm. In this state, the total content of interlaminar voids was 1.2 mm, which corresponded to about one-fourth of the wall thickness.

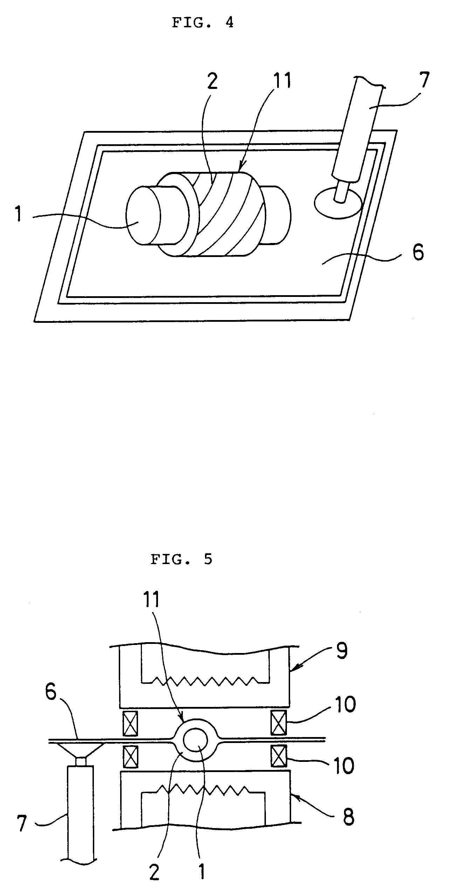

The winding 11 together with the mandrel 1 as shown in Fig. 4 was placed in a vacuum bag 6 and hermetically sealed and the air in the vacuum bag 6 was removed by suction through a vacuum hose 7 connected to a vacuum pump. The vacuum bag 6 was a one made of a polyimide film (Kapton 100H, a product of du Pont).

It is desirable that the polyimide film of the vacuum bag 6 be prevented from being wrinkled on the surfaces of the winding and the mandrel 1 after the vacuum packaging. By performing vacuum packaging with the vacuum bag 6, the atmospheric pressure of 1 kg/cm² can evenly act on the laminated part of the winding from the external periphery of the winding to constrain its external shape without fail.

The winding 11 whose external shape was constrained in this way and the mandrel 1 were placed in an electric oven and thermoformed as shown in Fig. 5. This electric oven was adapted so that the inside thereof may be kept at 400° C by arranging heating blocks 8 and 9 at the top and bottom and sealing the space with heat-insulating blocks 10. Thirty minutes after the heating was started, the winding 11 and the mandrel 1 were withdrawn from the elctric oven and cooled by standing, and the mandrel 1 was withdrawn from the winding 11 to give a pipe molding.

The obtained pipe was a high-quality one having an inner diameter of 36 mm and a wall thickness of 3.7 mm, containing reinforcing fibers oriented at an angle of ± 45° and being completely free of disturbance and further completely freed of voids when observed with a microscope.

### Example 2:

A pipe was made under quite the same conditions as those of Example 1, except that the lamination was effected so that the fiber orientation in the thermoplastic resin prepreg might be 0° and 90°.

The obtained pipe, like that of Example 1, was a high-quality one free of fiber disturbance or voids, and the reinforcing fibers were laminated at angles of 0° and 90°.

### Example 3:

A pipe was made in the same manner as that of Example 1 except that AC-40-60, a product of Phillips Petroleum, having a fiber volume fraction of 0.5 and containing PPS as the matrix was used as the thermoplastic resin prepreg and that a solid circular PFA rod was used as the mandrel. The means for constraining the outer shape of the winding comprised winding a 50 µm-thick polyimide film (Kapton 200 H tape, a product of du Pont) so as to allow it to lap one on another at a distance of one-third of its width, and the temperature was 310° C.

The obtained pipe was a high-quality one having an inner diameter of 34 mm and a wall thickness of 3.9 mm, containing reinforcing fibers oriented at angles of ± 45° and being completely free of disturbance and further completely freed of voids when observed with a microscope.
(2) However, since the above-mentioned process comprising using the solid mandrel relies upon the thermal expansion of the solid mandrel and the mold clamping, it sometimes happens that no hollow article free of voids and excellent in both the quality and appearance can be obtained in the case where the thermal expansion is not sufficiently effective for clamping, for example, the case wherein the wall thickness of the hollow article to be made is relatively thick and therefore a single thermal expansion of the solid mandrel is not sufficient in the case where the melting point or softening point of the thermoplastic resin as the matrix is relatively low and therefore the temperature difference between the solid mandrel and the thermoplastic resin cannot be large, so that the single thermal expansion is not sufficient.

Therefore, this invention provides a process which can produce a hollow article of a small outer diameter to thickness ratio by breaking through the limit in the production of a thick-wall hollow article encountered in producing a hollow article of a fiber-reinforced thermoplastic resin by using a solid mandrel. The hollow article obtained by this process can be used especially as pressure-resistant parts requiring strength and power transmission parts requiring bending rigidity and torsional rigidity. Further, this process can be applied also to the production of a pipe of continuous reinforcing fibers having an engineering plastic of a relatively low melting point as the matrix.

This process comprises winding a prepreg having a thermoplastic resin as the matrix around a solid mandrel comprising a resin having large thermal expansibility and heat resistance higher than that of the thermoplastic resin, heating the winding together with the mandrel to a temperature equal to or higher than the plasticization temperature of the thermoplastic resin while constraining the external shape of the obtained winding with an outer mold to thereby expand the solid mandrel and decrease internal voids in the winding, cooling the winding and the solid mandrel, withdrawing the solid mandrel from the winding to recover a hollow article, inserting a solid mandrel made of the same material as that of the above mandrel and having an outer diameter slightly larger than that of the mandrel into the hollow article, thermally expanding the solid mandrel again while constraining the outer diameter of this hollow article and repeating this procedure by gradually increasing the outer diameter of the solid mandrel to be inserted into the winding until voids between the plies of the hollow article are subtantially completely removed.

Namely, this process comprises using first a thin solid mandrel, thermally expanding this mandrel from the inside toward the outside thereof to thereby expand the inner diameter of the obtained hollow article, inserting thereinto a solid mandrel slightly thicker than the one initially used, thermally expanding this mandrel inside the hollow article to thereby expand the inner diameter of the hollow article and repeating the procedure comprising gradually increasing the diameter of the solid mandrel and heating the winding and the mandrel until the voids between the plies of the hollow article are substantially completely removed.

When the thermal expansion of a solid mandrel is conducted only once, it sometimes happens that it is possible to obtain only a hollow article having residual interlaminar voids because the inner diameter of the hollow article cannot expand sufficiently even when the mandrel is expanded in the production of a thick-wall hollow article which requires a larger expansion of the solid mandrel. However, it is possible to insert a solid mandrel slightly thicker than the one initially used into the hollow article because the inside of the hollow article in this state is enlarged to a value larger than the outer diameter of the initial one.

Therefore, the inner diameter of the finished hollow article is expanded by first using thinner solid mandrel and thermally expanding it toward the inside of the hollow article, inserting a solid mandrel slightly thicker than the one initially used into the hollow article and thermally expanding it again toward the inside of the hollow article. In this case, it is easy to insert the slightly thicker mandrel into the hollow article still having interlaminar voids. While the inserted solid mandrel is yet in an unheated state, the hollow article may be in either heated or unheated state. When the solid mandrel and the hollow body are brought to the processing temperature (above the plasticization temperature), the inner diameter of the hollow article is expanded as compared with the initial stage and interlaminar voids are decreased.

The procedure comprising gradually increasing the outer diameter of the solid mandrel inserted and heating it is repeated until the interlaminar voids of the follow article are substantially completely removed. Although these voids can be removed at once in most cases, a thicker mandrel is used otherwise. In this case, the voids can be easily and completely removed. This is due to the fact that the matrix resin is a thermoplastic one and can be reversively plasticized and solidified any number of times by controlling the temperature by heating and cooling.

Examples of the process of this invention for producing a hollow article in this case will be described with reference to the accompanying drawing figures.

### Example 4:

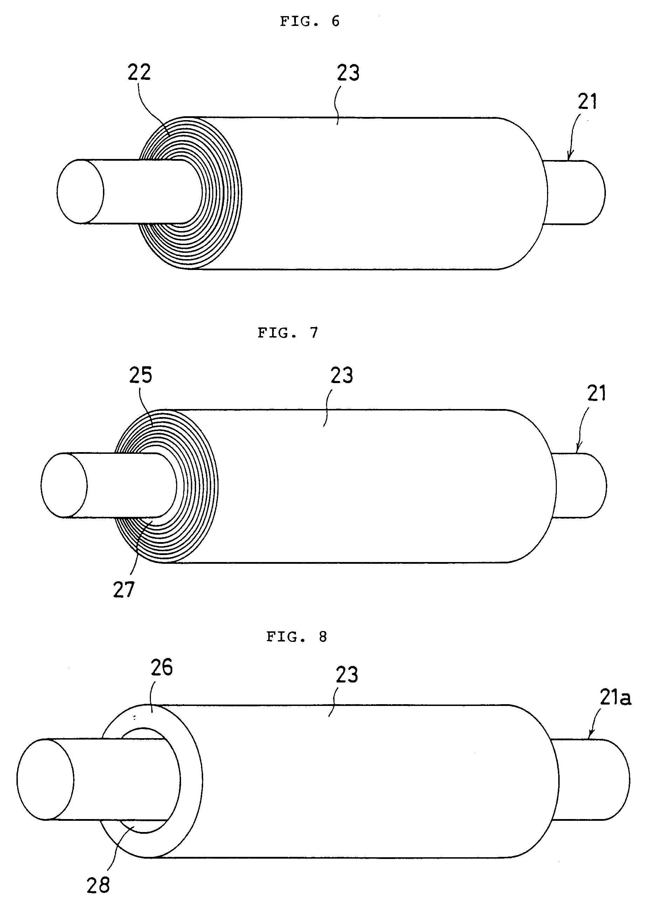

Figs. 6, 7 and 8 show a procedure of one example of this process. In Figs. 6 and 7, the reference numeral 21 represents a solid PTFE mandrel and the numeral 22 represents a winding prepared by winding a prepreg sheet (APC-2/AS4) formed by using PEEK as the matrix and reinforced with a carbon fiber around a mandrel 21 as tightly as possible, and its outer shape is constrained with a copper pipe 23.

The situation of Fig. 6 is a one realized by arranging a prepreg material to be formed into a product pipe in the space between a thermally expansible mandrel 21 and a copper pipe 23 which constrains the external shape. In this Example, the diamter of the mandrel 21 was 20 mm and the inner diameter of the copper pipe 23 was 32 mm.

The material in the situation of Fig. 6 was heated to 400° C, and when all of the mandrel 21, the prepreg sheet and the copper pipe 23 were heated to 400° C, they were cooled to room temperature to give a material in the situation of Fig. 7. Because the diameter of the mandrel 21 was expanded to 23 mm at 400° C, the prepreg sheet was uniformly compressed between the copper pipe 23 and the mandrel 21 under molten PEEK to form a pipe 25 of an inner diameter of 23 mm.

However, the pipe had interlaminar voids because it was not compressed sufficiently as yet. A clearance 27 was formed between the pipe 25 and the mandrel 21 when the mandrel 21 was cooled. This clearance 27 can allow a thicker mandrel 21a (of a diameter of 22 mm) to be easily inserted into the hollow article.

The thinner mandrel 21 was exchanged for the thicker mandrel 21a in this way, and the material was heated to 400° C in the same manner as above and cooled in the same manner as above to give a pipe 26 shown in Fig. 8.

The inner diameter of the pipe 25 containing the interlaminar voids was 25.3 mm after this step to give a pipe 26 completely freed of the voids and having good appearance and quality. In Fig. 8, clearance 28 was formed by cooling the mandrel, so that the mandrel 21a could be easily withdrawn from the pipe 26.

In this way, it was possible to obtain a good thick-wall pipe having a fiber orientation of ± 45°, a wall thickness of 3.35 mm and an outside diameter of 32 mm (with a ratio of the outer diameter to the wall thickness of 9.6) and free of interlaminar voids (the limit on a wall thickness of a pipe which can be prepared by a single expansion of the mandrel is 13.17 in terms of an outer diameter to wall thickness ratio).

### Example 5:

A pipe was made according to substantially the same procedure as that of Example 4 except that a prepreg material having PPS as the matrix and reinforced with a glass fiber was used.

Under the conditions of a diameter of the mandrel of 20 mm, an inner diameter of the copper pipe of 32 mm and a heating temperature of 330° C, a product of Fig. 7 was obtained. The diameter of the mandrel was expanded to 22.6 mm at 330° C to form a pipe 25 of an inner diameter of 22.6 mm.

A thicker mandrel (of a diameter of 22 mm) was inserted into the pipe 25 and heated again to 330° C to give a pipe of an inner diameter of 24.9 mm. Because this pipe still contained a bit of interlaminar voids and was not good, the mandrel was exchanged again for a slightly thicker one (of a diameter of 23 mm), heated again to 330° C and then cooled to give a product of Fig. 8 (where the mandrel was thicker than 21a by 1 mm). The pipe obtained in this way was a good one having an inner diameter of 25.6 mm, wall thickess of 3.2 mm and an outer diameter of 32 mm (with an outer diameter to wall thickness ratio of 10.0) and freed of interlaminar voids. Although the diameter (23 mm) of the mandrel was expanded to 25.99 mm (thermal expansion of 13 %) in this case, the expansion in the radial direction was limited by the prepreg material (after the voids were removed, the extra expansion turned to an expansion in the axial direction), so that the prepreg to be molded could be prevented from being subjected to extra expansion.

The wall thickness common to Examples 4 and 5 and the related Comparative Examples will now be discussed. The wall thickness in the case where the lamination was conducted so that no voids might be contained (because the resin cannot substantially flow unlike a thermosetting resin prepreg) can be determined by itself if the dimensions including the outer diameter of the pipe and the amount of the prepreg to be wound, namely the length of the prepreg in the direction of winding are given. When the diameter of the mandrel in a thermally expanded state was equal to or larger than the inner diameter finally expected, void-free pipes, like those shown in Examples 4 and 5, could be obtained, while when the diameter was smaller than that, a void-containing bad pipe was obtained.

### Comparative Example 1:

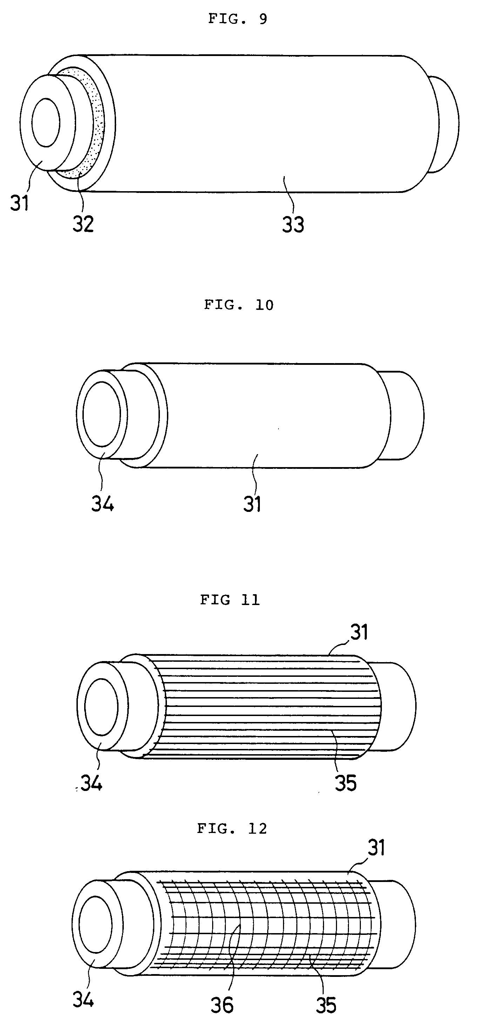

The pipe was a one obtained by the procedure which was quite the same as that of Example 4 to its middle while heating only once. This pipe had a wall thickness of 4.5 mm (the thickness in a void-free state was 3.3 mm) and a tolerable appearance but contained about 25 % of interlaminar voids (a pipe having such a high void content was very inferior in strength).
(3) When a hollow mandrel is used, a thermoplastic resin prepreg 32 as shown in Fig. 9 is interposed between the external periphery of a thermally expansible hollow cylindrical mandrel 31 and the internal periphery of a hollow cylindrical outer mold 32 having an inner diameter larger than the outer diameter of the mandrel 31. A hollow mandrel has a good thermal conductivity as compared with a solid mandrel.

The molding material (a thermoplastic resin prepreg 32) may be interposed between the external periphery of the hollow cylindrical mandrel 31 and the internal periphery of the hollow cylindrical outer mold 33 in the same manner as that of the above-mentioned case where a solid mandrel is used. A hollow article of a fiber-reinforced thermoplastic resin can be obtained by heating and cooling in the same manner as that of the case where a solid mandrel is used.

Further, as shown in Fig. 10, a solid or hollow metallic or ceramic core 34 may be inserted into the mandrel 31.

The mandrel 31 can be supported in this way, so that even when it is a thin-walled one, the molding material can be uniformly pressed against it without causing the deformation of the mandrel. When a hollow metallic core is used, especially the heat can be transferred rapidly and uniformly, which is very effective in improving the efficiency of production and the quality of the product.

Further, as shown in for example Fig. 11, the mandrel 31 may be reinforced with fibers 35 parallel (0°) with the axis. In this way, it is possible to restrict the thermal expansion in the axial direction and to strengthen that in the radial direction.

Furthermore, as shown in Fig. 12, the mandrel 31 may be reinforced with fibers 35 parallel (0°) with the axis and fibers 36 perpendicular (90°) with the axis. In this case, the mandrel 31 can be more uniformly expanded in the radial direction.

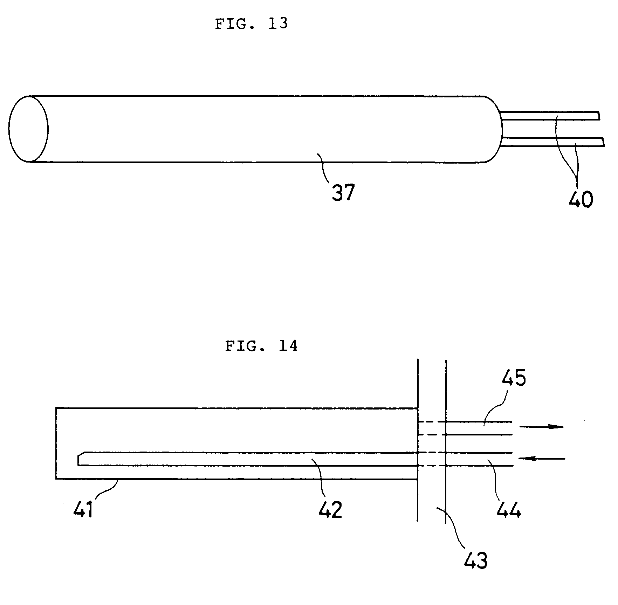

When the core 34 is a hollow one, it is desirable to provide the core 34 either with an electrical heater 37 in its inside as shown in Fig. 13, or with a cylinder having a built-in feeed pipe 42 for a heating medium as shown in Fig, 14. Since the processing can be conducted more rapidly and uniformly by this heating than by atmospheric heating, it is effective in shortening the production time and improving the quality of the product also in this case. This effect is marked especially for a long pipe (a large molding) which requires a long time until the entire reaches the temperature of the atmosphere when heated by atmospheric heating. In Fig. 13, the reference numeral 40 represents a power supply part. In Fig. 14, the reference numeral 42 represents the wall surface of a heating oven, the numeral 44 represents an inlet for a heating medium and the numeral 45 represents an outlet for the heating medium.

Examples of a process for producing a hollow article in this case will now be described.

### Example 6:

A hollow PTFE mandrel 31 shown in Fig. 9 was used to interpose a winding of a PEEK UD prepreg (APC-2/A34, a product of ICI-Fiberite) between the mandrel 31 and the outer mold 33, and the resultant assembly was held in a heating oven at 400° C for 30 minutes and quenched by immersing it in a water bath filled with cold water (about 20° C).

The obtained continuous carbon fiber-reinforced hollow article having PEEK as the matrix was a very homogeneous good molding which was freed of fiber disturbance and interlaminar voids anywhere.

### Comparative Example 2:

A continuous carbon fiber-reinforced hollow article having PEEK as the matrix was produced by using the same constitution as that of Example 6, except that a solid PTFE mandrel was used. Although the resultant assembly was held in a heating oven for 30 minutes also in this case, the central part of the mandrel could not be sufficiently heated and contained residual interlaminar voids unfavorably.

### Example 7:

A hollow article was produced in substantially the same manner as that of Example 6, except that a mandrel shown in Fig. 10 was used. The mandrel used here was a one produced by fitting a hollow article made of pure PTFE and having the same dimension as that of Example 6 around a metallic pipe. In this case, the heat could be evenly and rapidly transferred by the effect of the metallic pipe, and a product, like that of Example 6, having an excellent quality could be obtained by heating for 20 minutes.

### Example 8:

A product was made by using the same constitution as that of Example 6, except that a mandrel shown in Fig. 11 was used. The mandrel was the same as that of Example 7, except that it was reinforced with glass fibers in the axial direction and the wall thickness of PTFE was a half of that of Example 7, while the other conditions inclusive of the outer diameter of the mandrel were the same as those of Example 7 (the outer diameter of the metallic pipe was increased to make up for the decrease in the thickness of the PTFE). Although the wall thickness of PTFE in this case was smaller, the thermal expansion in the axial direction was restricted by the glass fiber, so that the thermal expansion in the radial direction could be sufficiently accomplished.

Since the PTFE layer was thin in this case, a good product could be obtained by heating only for 10 minutes. Further, the mandrel underwent little deformation, so that it could be reused as such. Although this mandrel was expensive because of its fairly complicted structure, its effect of reducing the overall production cost was marked in respect that the heating time was as short as 10 minutes and that the recovery of shape for repeated use was unnecessary.

### Example 9:

A product was made in the same manner as that of the other Examples, except that a bar heater (cartridge heater) shown in Fig. 13 was inserted into a metallic pipe shown in Fig. 10. When the heater was actuated in a heating oven, the uniform heating of the entire was completed within 3 minutes, and a good product could be obtained.

### Example 10:

A heater shown in Fig. 13 was inserted into a mandrel shown in Fig. 10 to prepare a mandrel provided with a heating means. A prepreg tape having PEEK as the matrix (APC-2/AS4) was wound around the mandrel to form a laminate structure of ± 45°, and an outer mold was fitted around it.

The resultant assembly was placed in a heating oven at 400° C and the heater was simultaneously actuated to thereby effect heating rapidly and uniformly in the axial direction by both the atmospheric heating and heater heating, whereupon the prepreg, the mandrel and the outer mold were heated to 400° C within about 3 minutes.

After the heater was withdrawn, the assembly was quenched by immersing it in cold water.

The hollow article produced in this way was a good one free from fiber disturbance and voids.
(4) The case where a composite prepared by arranging a plurality of thermally expansible elements on the surface of a core body and an assembly exclusively consisting of a plurality of thermally expansible elements are used as the core will now be described.

The function of the core body is to support the clamping force resulting from the thermal expansion of the core in clamping and to locate the individual thermally expansible elements. Therefore the core body should have sufficient mechanical properties such as strength and rigidity at the temperature of use and partitions, irregularities or other suitable means for constraining the thermally expansible elements (there is a case where such means are unnecessary according to the shape of the thermally expansible element used). It is desirable that the core body is further provided with a suitable means for accelerating heating or controlling cooling. The core body may be hollow or solid. It is desirable that the core body is constituted, if necessary, so that it may be disassembled.

Exception to the structural elements of the core is that the core may exclusively consist of a plurality of thermally expansible elements. Because the problem that the quality of the product is nonuniform due to thermal conductivity is negligible when the product is a relatively small or thin one, a good product can be obtained even by using a core exclusively consisting of thermally expansible elements. Therefore, it is unnecessary in this case to use intentionally core having a core body.

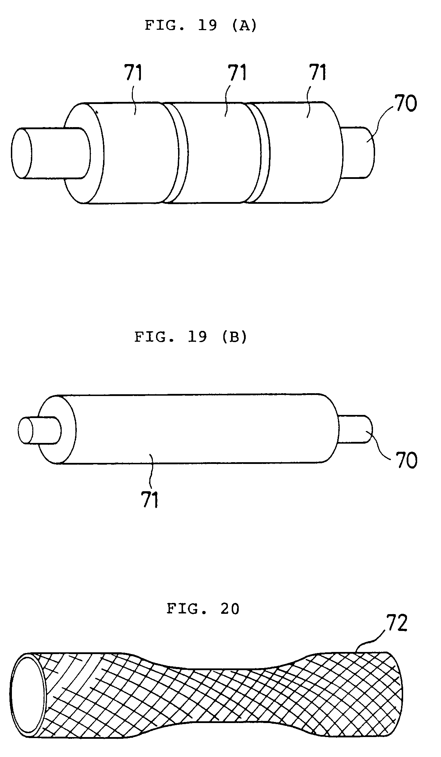

Although the core having a core body is not particularly limited in the number and shape of thermally expansible elements, examples thereof include cores prepared by arranging one to several annular elements on a core body as shown in Figs. 19 (A) and 19 (B). Fig. 19 (A) shows the case where three annular, thermally expansible elements 71 are fitted to a core body 70. Fig. 19 (B) shows the case where one annular, thermally expansible element 71 is fitted to a core body 70. The core having one thermally expansible element 71 is equivalent to the case of a solid or hollow mandrel.

The diameter and size of the annular thermally expansible element can be varied according to the shape of the product. The means for joining the thermally expansible element with the core body when the thermally expansible element is an annular one may be any of, for example, protrusions, partitions provided on the core, irregularities provided on the surface of the core body, a mechanism as part of the outer mold, or a mechanism independent of the core body or the outer mold.

When a thermally expansible element to be used is other than the annular one, e.g., one of the forms of plate, rod or tile, it is desirale to use a joining means by which the joining can be performed more surely than that for the annular ones. Although the joining in this case need not be tight, it must be strong enough to prevent disjoining.

Although the thermally expansible elements are not necessarily bonded together intimately, they must be designed so that they can be bonded closely by expansion to the surface of the core before the matrix of the molding material begins to flow. The thermally expansible elements may also be previously fitted to each other like a jigsaw puzzle.

Generally, the thermally expansible elements are thermally expanded individually in the directions of X, Y and Z, but when they are subjected to a high compressive stress like that in this invention, they can expand so as to fill the gaps by suitable elastic or plastic deformation. Therefore, it is not always necessary to design the thermally expansible elements on the basis of the shape of the thermally expansible elements deformed by heaiing in consideration of an isotropic thermal expansion.

It is also possible that only the expansion in the effective direction is utilized (in this cse, the direction X coincides with the normal of the product) by previously reinforcing the thermally expansible elements with a fiber to thereby make them highly anisotropic (it is possible in an extreme case to allow the thermally expansible element to expand in the X direction only and inhibit its expansion in the Y aned Z directions). It is also possible to use thermally expansible elements containing a filler of a high thermal conductivity in order to improve the thermal conductivity.

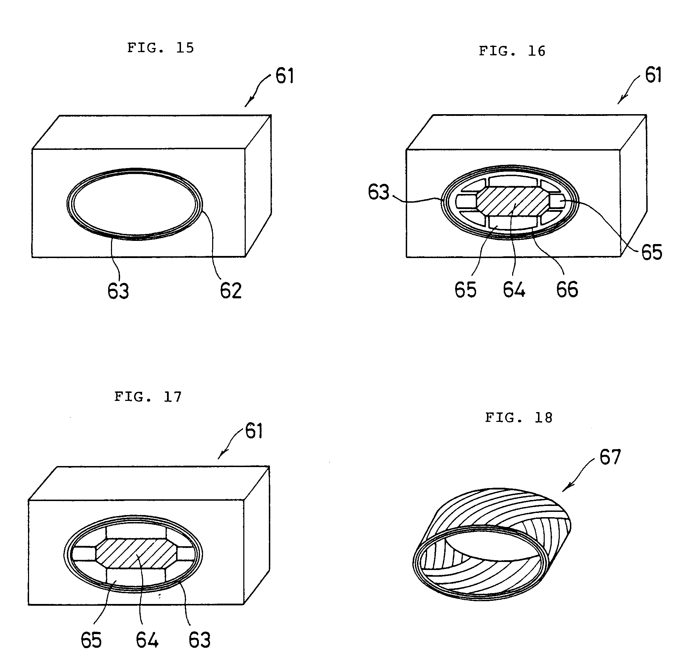

When a composite prepared by arranging a plurality of thermally expansible elements on the surface of a core body is used as a core, a thermoplastic resin prepreg as shown in Fig. 15 was wound along the inner surface of a circular or an elliptical section through a cavity 62 of an outer mold 61 in the form of a desired layer structure to form a hollow winding 63 of a circular or an elliptical section.

Although the outer mold 61 is not particularly limited in its material, it must be free from deformation or deterioration at the processing temperature and withstand the pressure resulting from the expansion of the thermally expansible elements, and therefore it is desirably made of a metal such as iron or an aluminum alloy. Further, although the mold 61 may be an integral one, it is desirably a split mold which can be splitted into upper and bottom halves which can be clamped together with bolts, etc., because the product can be easily withdrawn therefrom.

In this invention, the thermoplastic resin prepreg is wound along the inner surface of the cavity 62 of the outer mold 61 in the form of a desired layered structure. Because the thermoplastic resin prepreg in this case is in the form of for example a cured sheet, it will suffice when it is wound in the spiral form and placed in the cavity 62. Further, the prepreg may be temporarily bonded by spot welding with a soldering iron or the like in winding it. If necessary, the inner surface of the cavity 62 may be previously coated with a mold release or the like.

As shown in Fig. 16, an elliptical section core 66 comprising a core body 64 and a plurality of thermally expansible elements 65 arranged around the core body 64 is inserted into the hollow of a hollow winding 63.

The core body 64, like the outer mold 61, must be free from deformation or deterioration at the processing temperature and withstand the pressure resulting from the expansion of the thermally expansible elements, so that it is desirably made of a metal though its material is not particularly limited. The core body may be a hollow or caved one instead of the solid one. It is desirable that the core body 64 is a hollow or caved one, because the core body 64 itself will have a reduced weight and a good thermal conduuctivity thereby.

The thermally expansible element 65 exhibits isotropic thermal expansion (although it sometimes happens that it still shows more or less anisotropy according to the molding conditions, etc., it can be regarded macroscopically as being isotropic). Therefore, the thermally expansible elements 65 are arranged so that gaps may be formed between them as shown in Fig. 16. It is also possible if necessary that the thermally expansible elements 65 are prevented from being fused together by inserting a metallic foil or the like between the elements.

The hollow winding 63 into which the core 66 is inserted in this way is heated.

Suitably the heating is performed by placing them together with the outer mold 66 in a heating oven (desirably a hot air oven or a degreasing oven). Desirably the heating temperature is higher than the melting point of the matrix resin of the prepreg by 30 to 100° C. It will suffice when the heating time is one necessary for the entire to reach the atmospheric temperature. The thermally expansible elements 65 are thermally expanded by this heating in the directions of X, Y and Z to cause them to bond closely to each other as shown in Fig. 17 and to press the hollow winding 63 from the inside toward the outer mold 61 to thereby clamp the winding 63 evenly throughout the entire periphery.

When the entire is then cooled, the thermally expansible elements 65 restore their initial dimensions (see Fig. 16). Therefore, by withdrawing the hollow winding 63 from the outer mold 61 after being cooled, a product (elliptical spring) 67, as shown in Fig. 18, having an appearance free of fiber disturbance and unevenness of thickness and excellent mechanical properties can be obtained.

Examples of the process for producing a hollow article in this case will now be described.

### Example 11:

A UD prepreg sheet having PEEK as the matrix (APC-2/AS4, a product of ICI-Fiberite) was placed in the cavity 62 of an iron outer mold 61 as shown in Fig. 16 so that the formed winding might have a laminate structure of ± 45° and a thickness of just 3.0 mm and a total ply number of 24 (12 for each), then thermally expansible PTFE elements 65 were fitted and placed inside the winding, and an aluminum core body 64 was placed inside the elements 65.

The resultant assembly was held in a hot air oven kept at 400° C for 60 min. After it was confirmed that as shown in Fig. 17, the thermally expansible elements 65 were bonded to each other and the gaps between plies of the hollow winding 63 disappeared, the assembly was withdrawn from the oven and cooled to give an elliptical spring, as shown in Fig. 18, free of voids and fiber disturbance and excellent in appearance and properties. This elliptical spring had a ring width of 50 mm, a minor diameter of 77 mm, a major diameter of 154 mm, a wall thickness of 3 mm and a Vf of 0.61.

### Example 12:

A hollow article was produced in the same manner as that of Example 11, except that the laminate structure was a crossed lamination of 0° and 90° with respect to the peripheral direction (the outermost layer: 0°). The product was an ellliptical spring similar to that of Example 11.

Additionally speaking, in the molding of a composite having a thermoplastic resin as the matrix and reinforced with a continuous fiber, it is important to know (1) whether or not the fiber orientation can be realized as designed without disturbance, (2) whether or not interlaminar voids disappear and (3) whether or not the dispersion of fibers is uneven to give rise to the wrinkles of the resin in some places. This is because the fact that the product is free of fiber disturbance, interlaminar voids and separation between the fiber and the resin quarantees its high performance. When the product has a weak point not satisfying any of these respects, the rupture of the product propagates from this point to give a defective product. Thus the products obtained in Examples 11 and 12 were cut to prepare a number of test pieces, which were subjected to a bending test in order to check such points, whereupon it was revealed that the products had sufficient mechanical strengths and excellent and homogeneous qualities of a very small dispersion and satisfied the above respects.

### Example 13:

A hollow article was produced in the same manner as that of Example 11, except that a UD prepreg sheet having PPS as the matrix (Ryton, a product of Phillips Petroleum) was used, that the processing temperature was kept at 330° C and that a 1.0 mm-thick aluminum plate was sandwiched between the core body 64 and the thermally expansible elements 65. An elliptical spring similarly excellent in appearnace and performances was obtained.

The aluminum plate was used in order to compensate for short thermal expansion because the thermal expansion of the thermally expansible elements 65 designed for 400° C was insufficient.

### Comparative Example 3:

An elliptical pipe was produced by winding a PPS/carbon fiber prepreg sheet around an iron mandrel heated to 310° C while rotating the mandrel and deaerating the winding by pressing the winding with two pairs of rolls.

No product of stable quality could be obtained in this case because it was difficult to wind the prepreg sheet around the iron mandrel heated to 310° C at an exact angle of fibers.

### Example 14:

### Venturi tube (laminate structure of ± 45° with respect to the axis of rotation)

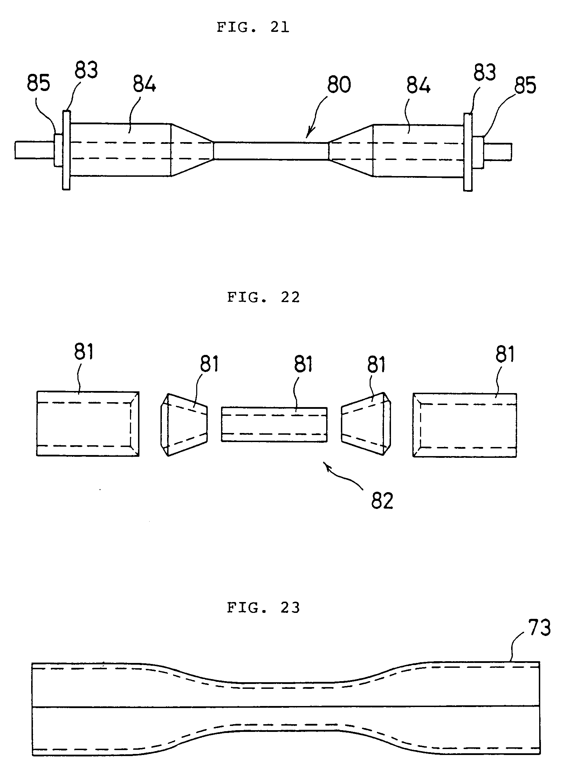

A product 72 (a Venturi tube of a diameter of 10 cm) shown in Fig. 20 was made by using an outer mold 73 (a single split mold whose inner surface was coated with Teflon for mold release) shown in Fig. 23 and a core 82 comprising a core body 80 shown in Fig. 21 and a thermally expansible PTFE element 81 shown in Fig. 22 (this core had a structure capable of being disassembled and it could be withdrawn from the core 82 by disassembling after the product was made).

A tow of a prepreg having PEEK as the matrix (a width of about 3 mm and a thickness of about 0.13 mm, APC-2/AS4, a product of ICI) was knitted with a braider to form a total of 16 preforms of an angle of brading of ± 45°. This preform of the Venturi tube has a wall thickness of about 5 mm which was about 2.5 times as large as that (2 mm) of the finished product. The preform was spot-bonded at necessary points in order to prevent it from being disintegrated.

A core body 80 shown in Fig. 21 was inserted into this preform by partial disassembling, and thermally expansible elements 81 were arranged on this core body 80 to form a core. Although small gaps were left between the thermally expansible elements 81 in this case, they had been adapted so that these gaps might disappear when they are heated to the processing temperature, and therefore the thermally expansible elements 81 might press the preform against the outer mold 73 to effect clamping.

This preform and the entire core were placed in the outer mold 73 shown in Fig. 23, and after the outer mold 73 was prevented from opening, the resultant assembly was sent to the subsequent step. The outer mold 73 was a split mold bacuase of the necessity for withdrawing the product and was coated with Teflon for mold release.

In the subsequent step, a heat-insulating material was wound around the external surface on the thicker part of the outer mold 73 to allow the thinner part of the outer mold 73 to be heated first, and the assembly was placed in a heating oven at 400° C. After the assembly was heated to about 400° C, the wound insulating material was removed and the assembly was cooled by immersing it in a water bath. In this way, a quenching process recommended for APC-2 was realized.

The effect of a flange 83 shown in Fig. 21 will be described. This flange 83 is prevented from moving in the outward direction of the axis of the core body 80 by a nut 85, so that it can prevent the thermally expansible elements 81 from expanding in the direction of the axis of the core body 80 and can effectively cause the thermal expansion of the core body 80 in the radial direction. Further, this flange 83 can prevent the thermally expansible elements 81 from being quenched by contact with water in cooling to thereby prevent the thermally expansible elements 81 from being excessively shrunk and being released from the product before the matrix of the product is coagulated, or prevent interlaminar voids from being formed due to insufficient clamping. The reference numeral 84 represents a tapered sleeve.

The core and the outer mold were disassembled to release the product from the mold. The core could be disassembled by removing the nut 85. The obtained product was a one having a highly balanced appearance, freed of distrubance of an angle of brading, wrinkles, voids, irregularities on the inner and outer surfaces and having a very good dimensional accuracy. Further part of the product was sampled as the test piece to be subjected to a static mechanical test. This test revealed that the product had expected strength and rigidity and sufficient mechanical properties and could fully exhibit the performance of the thermoplastic resin matrix.

### Example 15:

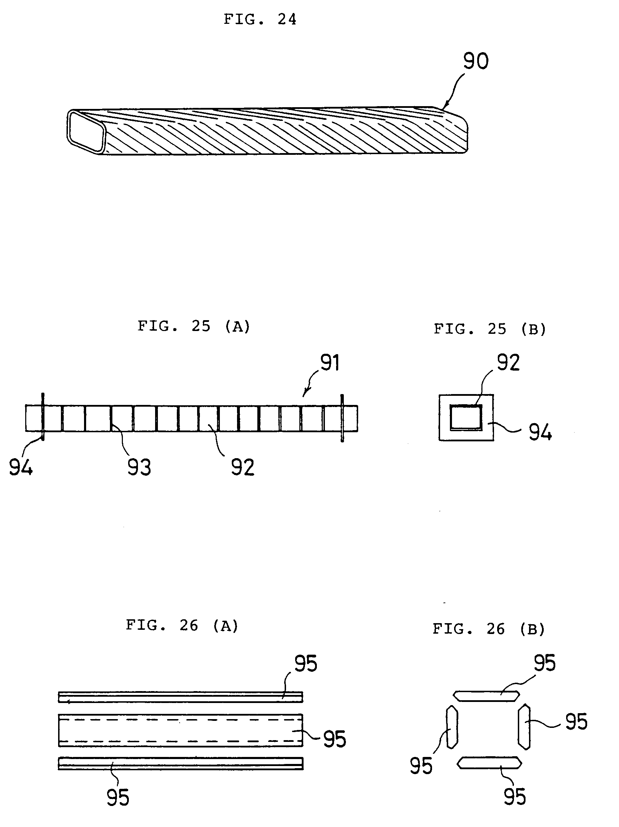

### Square pipe (shown in Fig. 24, a laminate structure of 0° and ± 45° with respect to the axis, a section of about 4 cm x 6 cm, a corner of a radius of curvature of 10 mm and a thickness of 3 mm)

A unidirectinally doubled prepreg tape having PEEK as the matrix (a width of about 30 cm and a thickness of about 0.13 mm, APC-2/AS4, a product of ICI) was cut so that a desired laminate structure might be formed, and the obtained structure was subjected to butt splicing to form a belt. This belt was wound into a cylinder of the same perimeter as that of the square pipe and spot-bonded at several necessary points to prevent its loosening.

The preform obtained in this way was placed in an outer mold subjected to mold release treatment like that of Example 14 while it was being deformed. After the outer mold was prevented from opening, a core was assembled in the preform.

The core body 91 shown in Figs. 25 (A) and 25 (B) was composed of metallic square pipes 92 and flanges 94 (preventing the thermally expansible elements from being moved in the axial direction of the core body 91). The surface in contact with the thermally expansible PTFE elements was provided with gooves 93. The groove 93 as means for preventing the thermally expansible elements 95 shown in Figs. 26 (A) and 26 (B) from excessively expanding in the axial direction of the core body 91.

The resulting assembly was placed in a heating oven at 400° C. In the Example 15, no heat-insulating material was wound around the outer surfaces on the ends of the outer mold unlike the case of the Example 14 because the core body 91 in the Example 15 was a hollow square pipe and therefore also the central part of the product 90 could be sufficiently and rapidly heated without causing substantial disadvantage. However, when the product is a longer one though a core of the same structure is used, it is preferable to wind the heat-insulating material as in the case of the Example 14.

After the assembly was heated to about 400° C, it was cooled by immersing it in a water bath. In this way, a quenching process recommended for APC-2 was realized.

The core and the outer mold were disassembled to release the product from the mold. The obtained product was a one like that of Example 14, having a highly balanced appearance, freed of disturbance of an angle of constitution, wrinkles, voids and irregularities on the inner and outer surfaces. Part of the product was sampled as the test piece to be subjected to a static mechanical test. This test revealed that this product, like that of the Exmaple 14, had expected strength and rigidity and sufficient mechanical properties and could sufficiently exhibit the performance of the thermoplastic resin matrix.

### Example 16:

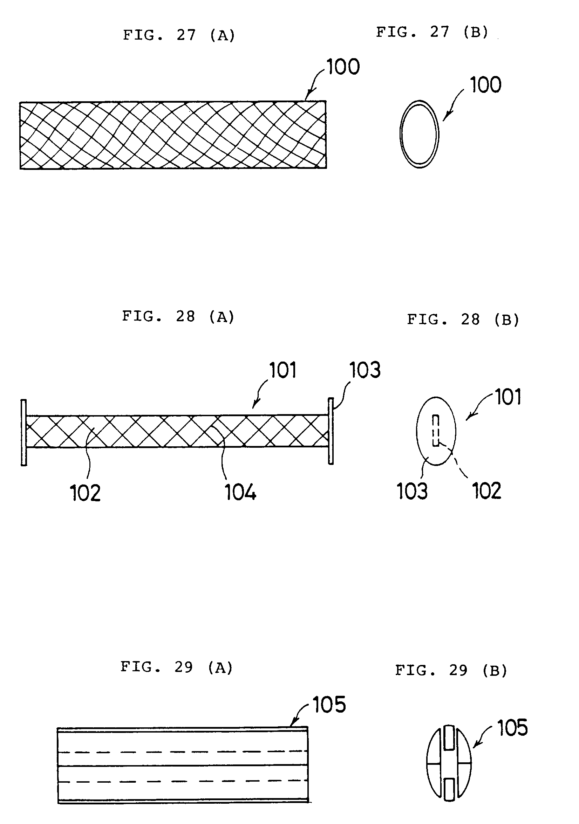

### Elliptical pipe [± 45°, major diameter of 10 cm, minor diameter of 6 cm, wall thickness of 1 mm, shown in Figs. 27 (A) and 27 (B)]

A unidirectional doubled prepreg tape having PPS as the matrix (width of 10 cm, thickness of about 0.13 mm, Ryton a product of Phillips Petroleum) was cut so that the designed laminate structure might be formed, and was further subjected to butt splicing to form a belt. This belt was wound around into a cylinder of the same perimeter as that of the elliptical pipe and was spot-bonded at several necessary points to prevent its loosening.

The preform obtained in this way was placed in an outer mold subjected to the same mold release treatment as that of Example 14, while it was being deformed. After the outer mold was prevented from opening, a core was assembled in the preform.

A core body 101 was made of aluminum and, as shown in Figs. 28 (A)and 28 (B), was composed of a metallic plate 102 and flanges 103 (preventing the thermally expansible elements from moving in the outward direction of the axis of the core body 101), and its surface in ccontact with the thermally expansible PTFE elements was provided with grooves 104. The groove 104 was a means for preventing the thermally expansible elements 105 shown in Figs. 29 (A) and 29 (B) from excessively expanding in the axial direction of the core body 101. Because the area of contact between each thermally expansible element 105 and the core body 101 was relatively small, the surface was provided with many grooves 104. The thermally expansible elements 105 were made of a silicone resin reinforced with fibers in the axial direction (lengthwise direction).

After a heat-insulating material was wound around the external surface on each end (about one-fourth of its entire length) of the outer mold to allow the central part of the product to be first heated, the assembly was placed in a heating oven at 310° C.

After the assembly was heated to about 310° C, the wound heat-insulating material was removed and the assembly was cooled by immersing it in a water bath. In this way, a quenching process recommended for Ryton was realized.

The product was released by disassembling the core and the outer mold. The obtained product 100 was a one, like that of the Example 14, having highly balanced appearance, freed of disturbance of an angle of constitution, wrinkles, voids and irregularities on the inner and outer surfaces and having very good dimensional accuracy. Part of this product 100 was sampled as the test piece to be subjected to a static mechanical test. This test revealed that the product 100, like that of the Example 14, had expected strength and rigidity and sufficient mechanical properties and could exhibit sufficiently the performances of the thermoplastic resin matrix.

### Example 17:

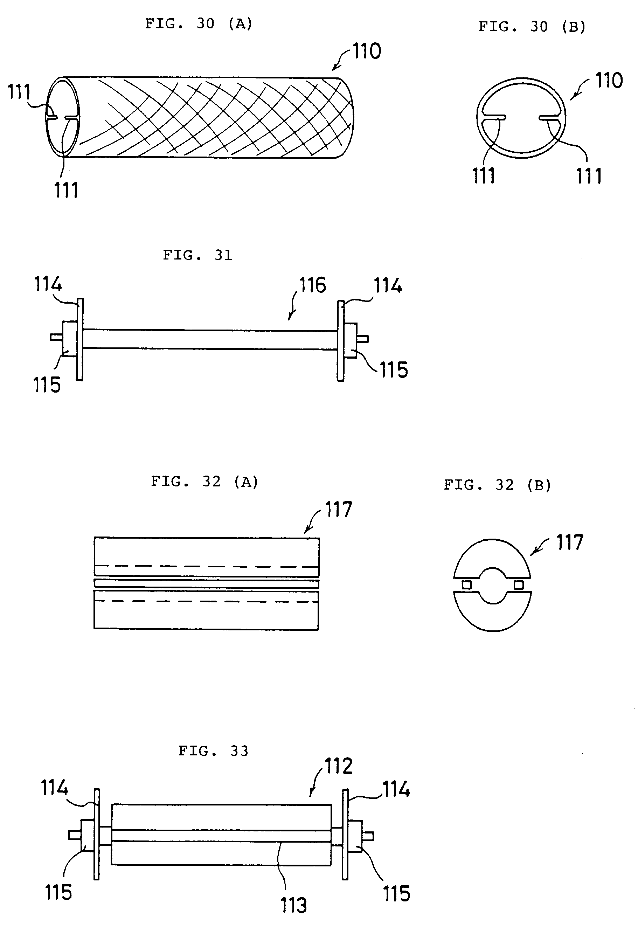

### Ribbed circular pipe [± 45° having 3-cm long radial ribs 111 as shown in Figs. 30 (A)and 30 (B) in a pipe of a diameter of 10 cm and a wall thickness of 3 mm]

Previously molded ribs were placed in two grooves 113 in a core 112 of Fig. 33. A predetermined amount of a product prepared by cutting a plain weave of a commingled yarn comprising PEEK yarn and a carbon fiber obliquely cut at an angle of 45° was wound around the core 112. One turn of a copper foil of a thickness of 35 µm as a mold release foil was further wound therearound. The assembly was inserted into an outer mold (an integral one not a split one), and the both ends of the outer mold were blocked with the flanges 114 of the core 112. The inside of the outer mold was purged with nitrogen gas (N₂), and the nuts 115 on both ends of the core 112 were fastened so as not to leave gaps.

The core 112 was prepared by arranging thermally expansible PTFE elements 117 as shown in Figs. 32 (A) and 32 (B) on the core body 116 shown in Fig. 31. The core body 116 was composed of iron parts and could be disassembled by unfastening the nuts 115 on the ends.

A heat-insulating material was wound around the external surfaces on both ends of the outer mold to allow the central part of the molding material to be heated first, and the assembly was placed in a heating oven in an N₂ atmosphere at 400° C. After the assembly was heated to about 400° C, it was held for about 20 minutes in this state. After the wound heat-insulating material was removed, the assembly was cooled by immersing it in a water bath. In this way, a quenching process recommended for a PEEK/carbon fiber was realized.

The reason why the heat-insulating material was wound around the external surfaces on both ends of the outer mold was the same as that of the Example 14 or the like. The object of heating the molding material in an N₂ atmosphere was to prevent a problem from arising in the formation of an interface between the carbon fiber and the PEEK due to an influence such as oxidation of the surface of the carbon fiber. This is a usual means adopted when a prepreg in which no interface is formed is used. The object of holding the assembly for 20 minutes after being heated to about 400° C was to fully accomplish the impregnation of the carbon fiber with the resin and the dispersion of the resin in the carbon fiber. This is also a usual means adopted when a molding metarial whose impregnation is performed during molding is used.

Next the core 112 was disassembled, and a product 110 to which the copper foil was stuck was withdrawn from the outer mold. Although the copper foil could be easily peeled from the product, it was also possible as an alternative means to remove the copper foil by immersing the product 110 together with the adherent copper foil in a chemical solution (for example, a ferric chloride solution) which could dissolve copper.

The obtained product 110 was a one having a highly balanced appearance, freed of disturbance of an angle of constitution, wrinkles, voids and irregularities on the inner and outer surfaces and having a very good dimensional accuracy, and the areas of the inner surfaces to which the ribs 111 were fixed could be welded smoothly and integrally. Part of this product was sampled as a test piece to be subjected to a static mechanical test. This test revealed that the product 110, like those of the other Examples, had expected strength and rigidity and sufficient mechanical properties, and could sufficiently exhibit the performances of the thermoplstic resin matrix.

### Example 18:

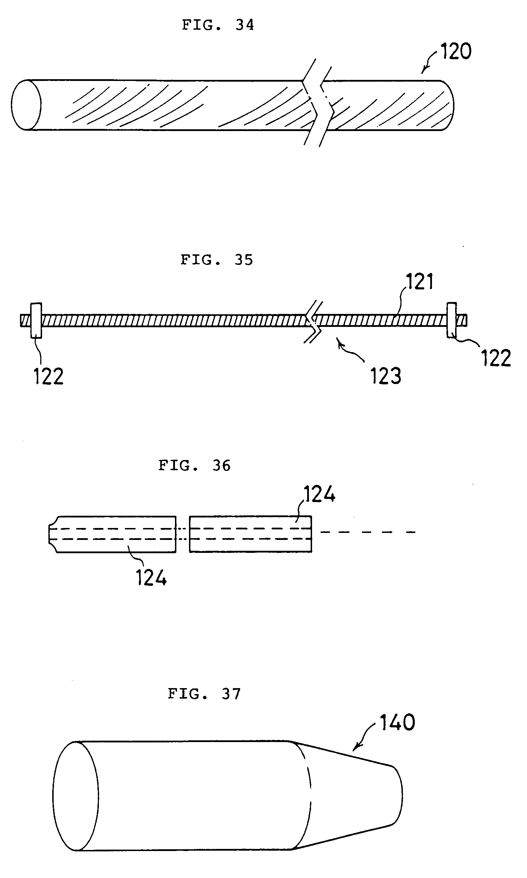

### Long pipe (shown in Fig. 34, laminate structure of 0°, 90°, ± 45°, diameter of 5 cm, length of 2 m and wall thickness of 2.5 mm)

A preform having such an outer diameter that it could be just inserted into the outer mold was molded in the same manner as that of the Example 15 by using a prepreg tape having PEEK as the matrix which was the same as that of the Example 15. The preform was inserted into an outer mold of a seamless steel pipe of a wall thickess of 1.0 mm. A core was prepared by arranging a necessary number of thermally expansible elements 124 made of a PTFE pipe as shown in Fig. 36 on a core body 123 comprising a threaded rod 121 and nuts 122 as shown in Fig. 35, and inserted into the preform. The portions of the thermally expansible elements 124 positioned in both ends of the core were chamfered.

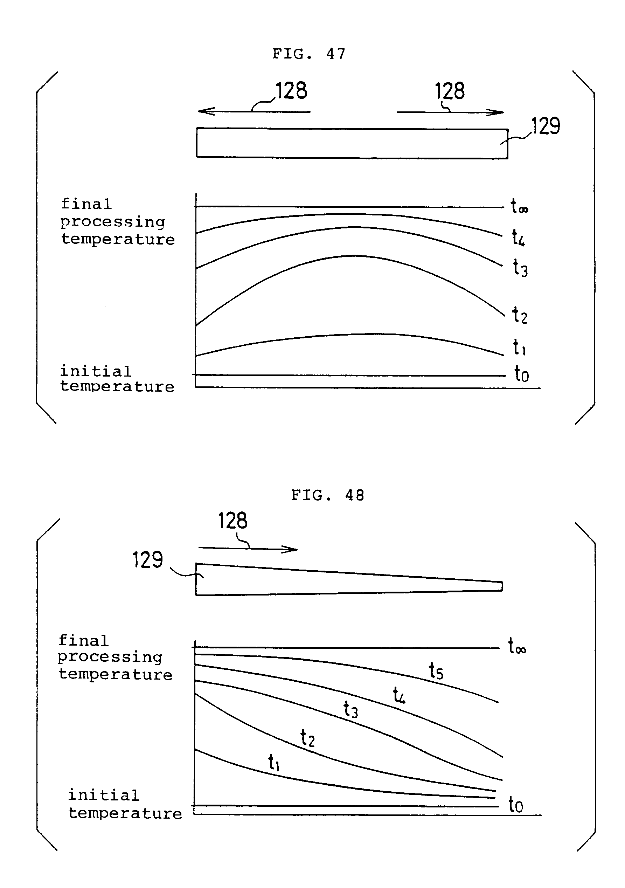

Five tubular ovens connected in series were prepared and their temperature was controlled according to a temperature profile as shown in Fig. 47.

Fig. 47 shows the temperature profile in the step of heating the molding material. In this heating, the core inside the molding material 129 was heated so that the thermally expansible elements might be thermally expanded progressively from its central part toward the ends, whereby the molding material could be washed out in the directions of an arrow 128 to prevent it from wrinkling and loosening and from having residual voids.

The temperature of the core was controlled in such a way that it was room temperature and was uniform throughout the core at the initial temperature (t₀); the central part of the core could be heated before the ends were done during the lapse of time with temperature changes of t₁, t₂, t₃ and t₄; and the assembly could be brought to the processing temperature uniformly throughout the core at the final temperature (t∞).

After the assembly was heated to about 400° C, the surface of the outer mold was cooled by spraying it with water in a state in which water could not penetrate into the inside of the outer mold. In this way, a quenching process recommended for APC-2 was realized.

After the core was withdrawn, the outer mold was removed with a chemical solution which could dissolve copper (although an aqueous sulfuric acid/hydrogen peroxide solution was used, a ferric chloride solution or the like could be used as well) to give a product 120.

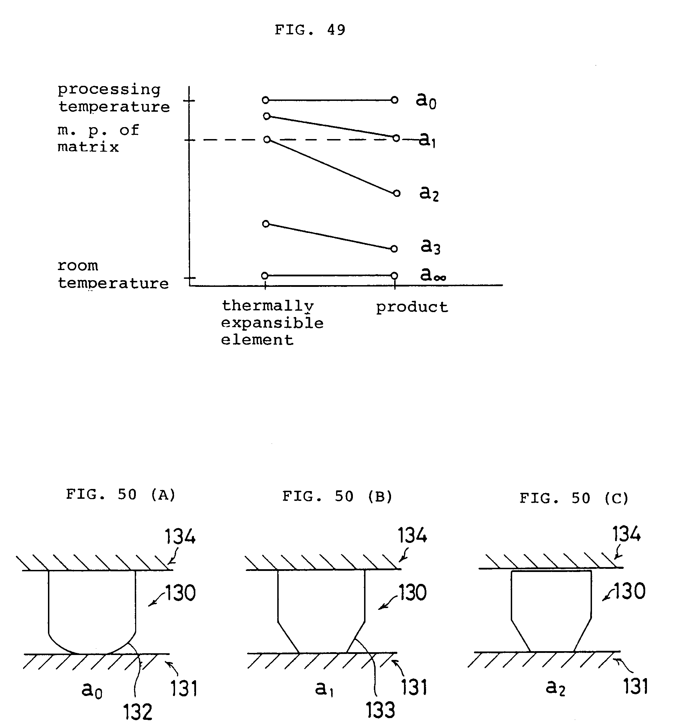

Referring to the core body 123, the thread of the rod 121 has a function of fastening the nuts 122 (on both ends) and a function as irregularities for preventing the thermally expansible elements 124 from excessively moving toward the axial direction of the core body 123. Therefore, a ready-made threaded rod can be used as the rod 121, which is economical. Each nut 122 prevents the thermally expansible elements 124 from excessively expanding toward the outward axial direction. Further, each nut 122 can allow the thermal expansion in the radial direction of the core body to occur sufficiently at the ends of the product to fully realize clamping. Further, clamping in the step of cooling, like that shown in Fig. 50, can be realized also in the step of cooling by the function of the dead volume near the ends of the thermally expansible elements 124 blocked by the nuts 122. The corner at the left end of the pipe of Fig. 36 can function as a dead volume.

Figs. 50 (A), 50 (B) and 50 (C) illustrate the effect of the dead volume which ensures clamping in the step of cooling. The thermally expansible element 130 performs sufficient clamping at time as according to the cooling pattern shown in Fig. 49 [Fig. 50 (A)], and a slightly excessive expansion of the thermally expansible element 130 forms a curve 132 and protrudes so as to lessen the dead volume. At time a₁, the thermally expansible element 130 slightly causes a temperature drop, so that its protrusion into the dead volume disappears, and the curve 132 turns to bend 133 while still performing clamping [Fig. 50 (B)]. At time a₂ at which the cooling is further advanced, the core is partly released from the mold [Fig. 50 (C)].

Fig. 49 shows a cooling pattern in the step of cooling the product at the processing temperature. When the product at the processing temperature is progressively cooled, it reaches the melting point of the matrix at time a₁. The thermally expansible element then is kept so that its temperature drop may be small. In this way, neither void formation due to short clamping nor release of the core from the mold before the solidification of the product occurs.

Although the thermally expansible elements 124 are composed of a series of short elements because ready-made pipy ones are used, longer elements can of course be used. The overall length of these combined thermally expansible elements should be 85 % of the distance between the nuts of the core body.

The outer mold is, unlike those of the other Examples, a copper seamleess pipe which cannot be reused. In this case, there are advantages (1) that the initial cost is low because the outer mold need not be made separately, (2) that the heat transfer is rapid because the outer mold has a thin wall and (3) that the appearance of the product is particularly excellent because the outer mold is a seamless pipe whose inner surface is smooth. On the contray, there are disadvantages that the cost of the mold is high because the copper seamless pipe must be fabricated when it cannot be selected from among ready-made pipes, and that a smelting apparatus for fabricating the copper seamless pipe is necessary . However, there is a relationship of trade-off between these advantages and disadvantages, so that the production of pipes can be rather effectively performed by properly selecting the process according to the intended use.

The obtained product 120 was a one having an external surface which was the most beautiful of all of those of the other Examples because it was quite free of the flash-line of a split mold or a line of the lap of the release foil, freed of disturbance of an angle of constitution, wrinkles, voids, irregularities on the inner and outer surfaces, and having a very good dimensional accuracy. Part of the product 120 was sampled as a test piece to be subjected to a static mechanical test. This test revealed that the product, like those of the other Examples, had expected strength and rigidity and exhibited mechanical properties in which the properties of the thermoplastic resin matrix could sufficiently be reflected.

### Example 19:

### Large profile pine (outer diameter of about 30 cm and length of about 1 m shown in Fig. 37)

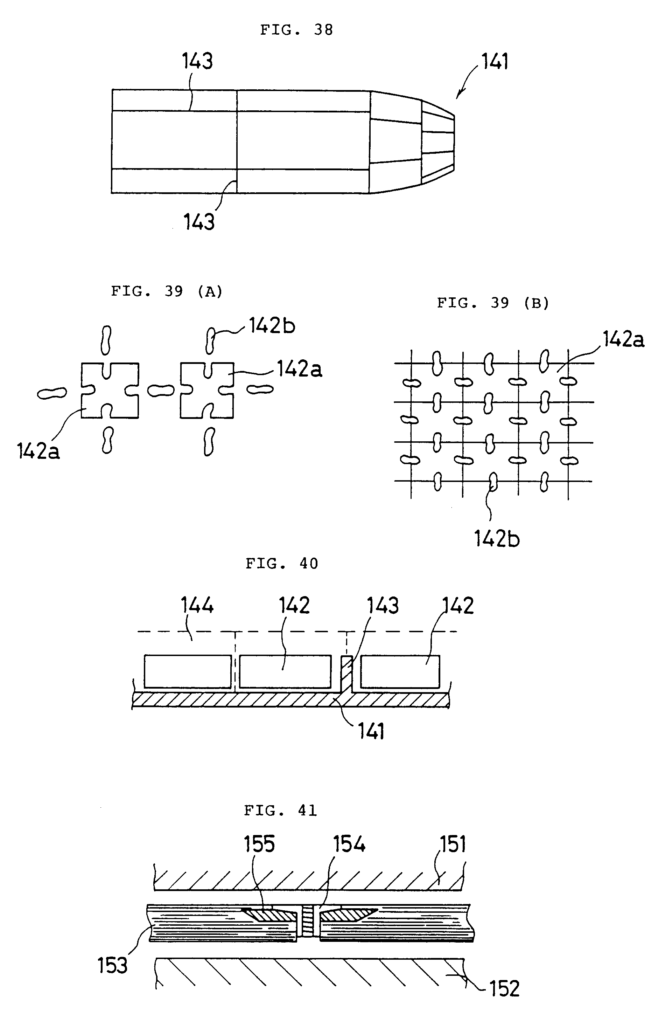

A core was prepared by arranging thermally expansible PTFE elements 142a and 142b (each about 2 cm in thickness) shown in Fig. 39 (A) on a divisible core body 141 having partitions on its surface as shown in Fig. 38 so that they might be arranged in a state interconnected with each other as shown in Fig. 39 (B). A preform was formed by using the same material as that of the Example 14 on this core with a braider. Fig. 38 shows a core body composed of divisible hollow iron articles. Partitions 142 for restricting the movement of the thermally expansible elements were mounted on the surface of the core body 141.

These members were placed in an outer mold (split die) whose inner surface was coated with a mold release, and the assembly was placed in a heating oven at 300° C. A blow pipe for hot air was inserted into the central part of the core to blow air heated to 400° C thereinto. After the core was adapted so that its central part might be heated first in this way and the assembly was heated to about 400° C, the outer mold was uniformly sprayed with water from its periphery. In this way, a quenching process for APC-2 was realized.

The core and the outer mold were disassembled and removed to give a product 140. Although the external surface of the product 140 was partially discolored due to the mold release, the appearance was highly balanced except this discoloration. The product 140 was freed of disturbance of an angle of constitution, wrinkles, voids, irregularities on the inner and outer surfaces and had a very good dimensional accuracy. Part of the product 120 was sampled as a test piece to be subjected to a static mechanical test. This test revealed that the product, like those of the other Examples, was excellent.

Fig. 40 shows a section of the core, where the thermally expansible elements 142 were separated by the partitions 143 of the core body 141. When this core was heated to the processing temperature, the individual thermally expansible elements 142 expand to a size shown by dotted lines to form enlarged elements 144, which were joined together to form the surface of the core.

### Example 20:

### Insertion of a metallic member into a hollow article

Fig. 41 shows a part where a metallic member is inserted into a hollow article.

The space between an outer mold 151 and thermally expansible elements 152 of a core was charged with a molding material 153, a metallic part 154 and a premolded reinforcing ring 155 (pseudoisotropic laminate), and the assembly was subjected to the same procedure as that of the other Examples to give a product 156.

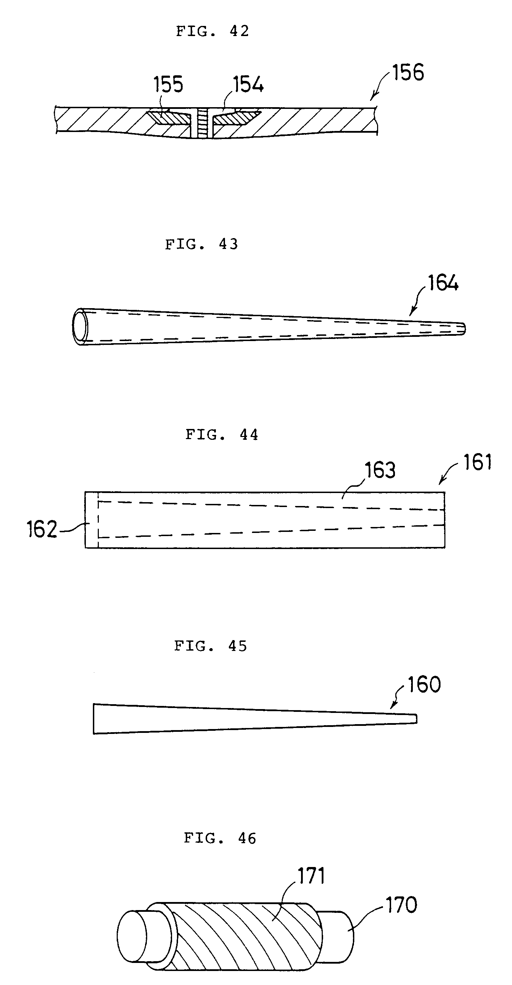

The part of insertion of the metallic member of the product 156 was as shown in Fig. 42, and a structure which could give the desired performance was realized.

### Example 21:

### Slim tapered pipe (Fig. 43)

A tow of a prepreg having PEEK as the matrix was knitted with a braider to form a preform on a tapered core 160 as shown in Fig. 45.

This preform and the core were placed in an outer mold 162 after one turn of a polyimide film (Kapton 100 H, a product of du Pont) was wound around the inner surface of the outer mold 161. The lid 162 of the outer mold 161 was firmly fixed to the cylindrical part 163 to prevent the core 160 from being detached during thermal expansion, and the assembly was placed in an oven consisting of three tubular ovens connected in series.

The molding material 129 was heated progressively from its thicker end according to the heating profile shown in Fig. 48. After the whole was heated to about 400° C, it was cooled by spraying it in the same manner as that of Example 18, and the product was obtained by releasing from the mold. Fig. 48 shows a temperature profile in the case where wash-out started with one end toward the other end of the core. Although the polyimide film was adherent to the product, it could be easily removed by immersion in an alkaline solution.

The obtained product 164, like those of the other Examples, was a one having sufficient appearance and mechanical propeties. The core used here was one exclusively composed of the thermally expansible elements without any core body. A core, like this core, used to obtain a relatively thin or small product may be a one without any core, because neither the heat transfer takes an excessively long time nor a large number of expensive thermally expansible elements should be used, and also the performances of the product have no problem.

### Example 22:

### Pipe of a diameter of 4 cm

A UD prepreg tape having PEEK as the matrix (APC-2/AS4, a product of ICI) was knitted in the same manner as that of the Example 15 to form a preform 171 around a core 170 comprising a circular rod of thermally expansible elements as shown in Fig. 46.

This preform and the core were vacuum-packaged by using two polyimide films as the outer mold. The assembly was placed in an oven at 400° C and, after being heated to about 400° C, it was cooled by immersing it in a water bath.

The obtained product had a substantially uniform appearance except that it had wrinkles of the vacuum pack and was freed of voids and disturbance of an angle of constitution.

Part of the product was sampled as a test piece to be subjected to a static mechanical test. This test revealed that the product, like those of the other Examples, was satisfactory.

As described above, according to this invention, a hollow article of a fiber-reinforced thermoplastic resin can be produced efficiently. The hollow article of this invention can be used not only as a light-weight high-strength member under a severe condition of use by virtue of the properties of a thermoplastic resin matrix but also be applied to monocoque structures of for example the bodies of flying objects, torque tubes, pressure vessels and truss structures used in aerospace vehicles.

## Claims

1. A process for producing a hollow article of a fiber-reinforced thermoplastic resin, comprising interposing a prepreg (2) having a thermoplastic resin, such as polyimide, comprising a reinforcing fiber (3) therein between a thermally expansible core (1) of polytetrafluoroethylene and an outer mold (23) outside said core, and applying pressure to said prepreg by heating said prepreg and said core to cause expansion of said core, and cooling said core and said prepreg, characterized in that the thermoplastic resin is selected from the group consisting of polyether ether ketone, polyether imide, and polyether sulfone as a matrix, and in, that the prepreg and the core are heated at a temperature equal to or higher than the melting temperature of said thermoplastic resin after the prepreg and the reinforcing fiber have been placed between the core and the outer mold, which is a metallic pipe.

2. A process for producing a hollow article of a fiber-reinforced thermoplastic resin according to claim 1, wherein the reinforcing fiber constituting the prepreg is a fiber of carbon, glass, aromatic polyamide, silicon carbide, boron or alumina.

3. A process for producing a hollow article of a fiber-reinforced thermoplastic resin according to claim 1 or 2, wherein the thermally expansible core is a solid mandrel, a hollow mandrel, a composite prepared by arranging a plurality of thermally expansible elements on the surface of a core body, or an assembly exclusively consisting of a plurality of thermally expansible elements.

4. A process for producing a hollow article of a fiber-reinforced thermoplastic resin according to any of the preceding claims, wherein the thermally expansible core can be disassembled and assembled.

5. A process for producing a hollow article of a fiber-reinforced thermoplastic resin according to any of the preceding claims, wherein the prepreg and the core are heated in such a manner that one part thereof is heated prior to the other part thereof.

6. A process for producing a hollow article of a fiber-reinforced thermoplastic resin according to any of the preceding claims, wherein the prepreg and the core are cooled in such a manner that the prepreg is cooled prior to the core.

7. A process for producing a hollow article of a fiber-reinforced thermoplastic resin according to any of the preceding claims, wherein the clamping in the step of cooling is kept by utilizing the dead volume of the core.

8. A process for producing a hollow article of a fiber-reinforced thermoplastic resin according to any of the preceding claims, wherein the obtained hollow article has protrusions, partitions or metallic members as part thereof.

9. A process for producing a hollow article of a fiber-reinforced thermoplastic resin according to any of claims 1 to 8, wherein said metallic pipe is a copper pipe, an iron pipe or an aluminium alloy pipe.

## Patentansprüche

1. Verfahren zur Herstellung eines Hohlkörpers aus faserverstärktem thermoplastischem Harz umfassend
- Anordnen eines Prepregs (2), das ein thermoplastisches Harz wie z. B. Polyimid enthält und eine Verstärkungsfaser (3) darin enthält, zwischen einem thermisch ausdehnbaren Kern (1) aus Polytetrafluorethylen und einer äußeren Form (23) außerhalb dieses Kerns;
- Anwenden von Druck auf dieses Prepreg durch Erhitzen des Prepregs und des Kerns, um eine Ausdehnung des Kerns zu bewirken; und
- Kühlen des Kerns und des Prepregs,
dadurch **gekennzeichnet,** daß das thermoplastische Harz als Matrix aus der aus Polyetherketon, Polyetherimid und Polyethersulfon bestehenden Gruppe ausgewählt wird, und daß das Prepreg und der Kern, nachdem das Prepreg und die Verstärkungsfaser zwischen dem Kern und der äußeren Form, die ein metallisches Rohr ist, plaziert worden sind, auf eine Temperatur erhitzt werden, die gleich der oder höher als die Schmelztemperatur des thermoplastischen Harzes ist.

2. Verfahren zur Herstellung eines Hohlkörpers aus faserverstärktem thermoplastischem Harz nach Anspruch 1, wobei die Verstärkungsfaser, die das Prepreg bildet, eine Faser aus Kohlenstoff, Glas, aromatischem Polyamid, Siliziumcarbid, Bor oder Aluminiumoxid ist.

3. Verfahren zur Herstellung eines Hohlkörpers aus faserverstärktem, thermoplastischem Harz nach Anspruch 1 oder 2, wobei der thermisch dehnbare Kern ein massiver Dorn, ein hohler Dorn, ein Verbundstoff, der durch Anordnen einer Vielzahl thermisch ausdehnbarer Elemente an der Oberfläche eines Kernkörpers hergestellt wurde, oder ein System, das ausschließlich aus einer Vielzahl thermisch ausdehnbarer Elemente besteht, ist.

4. Verfahren zur Herstellung eines Hohlkörpers aus faserverstärktem thermoplastischem Harz nach einem der vorangehenden Ansprüche, in dem der thermisch ausdehnbare Kern auseinandergebaut und zusammengebaut werden kann.

5. Verfahren zur Herstellung eines Hohlkörpers aus faserverstärktem thermoplastischem Harz nach einem der vorangehenden Ansprüche, in dem das Prepreg und der Kern in einer Weise erhitzt werden, daß ein Teil vor dem anderen Teil erhitzt wird.

6. Verfahren zur Herstellung eines Hohlkörpers aus faserverstärktem, thermoplastischem Harz nach einem der vorangehenden Ansprüche, in dem das Prepreg und der Kern in einer Weise abgekühlt werden, daß das Prepreg vor dem Kern abgekühlt wird.

7. Verfahren zur Herstellung eines Hohlkörpers aus faserverstärktem thermoplastischem Harz nach einem der vorangehenden Ansprüche, in dem das Einspannen (Einklemmen) im Kühlschritt durch Ausnutzen des toten Volumens des Kerns erfolgt.

8. Verfahren zur Herstellung eines Hohlkörpers aus faserverstärktem thermoplastischem Harz nach einem der vorangehenden Ansprüche, in dem der erhaltene Hohlkörper Rauhigkeitsspitzen, Zwischenwände oder metallische Elemente als Teil desselben aufweist.

9. Verfahren zur Herstellung eines Hohlkörpers aus faserverstärktem thermoplastischem Harz nach einem der Ansprüche 1 bis 8, in dem das metallische Rohr ein Kupferrohr, ein Eisenrohr oder ein Rohr aus Aluminiumlegierung ist.

## Revendications

1. Procédé pour produire un article creux fait d'une résine thermoplastique renforcée par des fibres, comprenant l'interposition d'un pré-imprégné (2) ayant une résine thermoplastique, telle que de polyimide, comprenant une fibre (3) de renforcement à l'intérieur entre un coeur (1) thermiquement expansible de polytetrafluoroéthylène et un moule externe (23) à l'extérieur dudit coeur, et l'application d'une pression audit pré-imprégné pour chauffer ledit pré-imprégné et ledit coeur pour provoquer l'expansion dudit coeur, et le refroidissement dudit coeur et dudit pré-imprégné, caractérisé en ce que la résine thermoplastique est choisie dans le groupe consistant d'une polyéther éther cétone, d'un polyéther imide, et d'une polyéther sulfone en tant que matrice, et en ce que le pré-imprégné et le coeur sont chauffés à une température égale ou supérieure à la température de fusion de ladite résine thermoplastique après que le pré-imprégné et la fibre de renforcement aient été placés entre le coeur et le moule externe, qui est un tuyau métallique.

2. Procédé pour produire un article creux fait d'une résine thermoplastique renforcée de fibres selon la revendication 1, où la fibre de renforcement constituant le pré-imprégné est une fibre de carbone, de verre, de polyamide aromatique, de carbure de silicium, de bore ou d'alumine.

3. Procédé pour produire un article creux fait d'une résine thermoplastique renforcée de fibre selon la revendication 1 ou 2, où le coeur thermiquement expansible est un mandrin solide, un mandrin creux, un composite préparé par arrangement d'une pluralité d'éléments thermiquement expansibles sur la surface d'un corps de coeur, ou un assemblage consistant exclusivement d'une pluralité d'éléments thermiquement expansibles.

4. Procédé pour produire un article creux fait d'une résine thermoplastique renforcée de fibres selon l'une quelconque des revendications précédentes où le coeur thermiquement expansible peut être désassemblé et assemblé.

5. Procédé pour produire un article creux fait d'une résine thermoplastique renforcée de fibres selon l'une quelconque des revendications précédentes où le pré-imprégné et le coeur sont chauffés de telle manière qu'une partie de ceux-ci est chauffée avant l'autre partie de ceux-ci.

6. Procédé pour produire un article creux fait d'une résine thermoplastique renforcée de fibres selon l'une quelconque des revendications précédentes où le pré-imprégné et le coeur sont refroidis d'une telle manière que le pré-imprégné est refroidi avant le coeur.

7. Procédé pour produire un article creux fait d'une résine thermoplastique renforcée de fibres selon l'une quelconque des revendications précédentes où le serrage dans l'étape de refroidissement est maintenu en utilisant le volume mort du coeur.

8. Procédé pour produire un article creux fait d'une résine thermoplastique renforcée de fibres selon l'une quelconque des revendications précédentes où l'article creux obtenu a des saillies, des parois ou des membres métalliques comme une partie de celui-ci.

9. Procédé pour produire un article creux fait d'une résine thermoplastique renforcée de fibres selon l'une quelconque des revendications 1 à 8, où ledit tuyau métallique est un tuyau de cuivre, un tuyau de fer ou un tuyau d'alliage d'aluminium.
